# EUROPÄISCHE PATENTSCHRIFT

(11) **EP 1 754 032 B1**
(45) Veröffentlichungstag und Bekanntmachung des Hinweises auf die Patenterteilung: **07.05.2008**
(21) Anmeldenummer: 05766803.0
(22) Anmeldetag: 02.06.2005
(51) Int. Cl.: G01J 3/18

(54) **ECHELLE-SPEKTROMETER MIT VERBESSERTER DETEKTORAUSNUTZUNG DURCH DIE VERWENDUNG ZWEIER SPEKTROMETERANORDNUNGEN**
ECHELLE SPECTROMETER WITH IMPROVED USE OF THE DETECTOR BY MEANS OF TWO SPECTROMETER ARRANGEMENTS
SPECTROMETRE-ECHELLE A MISE EN VALEUR AMELIOREE DU DETECTEUR PAR L'UTILISATION DE DEUX ENSEMBLES SPECTROMETRES

(30) Priorität: 09.06.2004 DE 102004028001
(43) Veröffentlichungstag der Anmeldung: 21.02.2007
(73) Patentinhaber: Gesellschaft zur Förderung angewandter Optik, Optoelektronik, Quantenelektronik und Spektroskopie e.V., 12489 Berlin (DE); Gesellschaft zur Förderung der Analytischen Wissenschaft e.V., 44139 Dortmund (DE)
(72) Erfinder: BECKER-ROSS, Helmut, 12557 Berlin (DE); FLOREK, Stefan, 12526 Berlin (DE); WESEMANN, Günter, 12487 Berlin (DE); OKRUSS, Michael, 14482 Potsdam (DE)
(74) Vertreter: Weisse, Renate
(86) Internationale Anmeldenummer: PCT/EP2005/052517
(87) Internationale Veröffentlichungsnummer: WO 2005/121723

(56) Entgegenhaltungen:
- US-A- 4 060 327
- 4TH MEETING OF THE EUROPEAN ASTRONOMICAL SOCIETY HELD JOINTLY WITH 39TH MEETING OF THE ITALIAN ASTRONOMICAL SOCIETY ON PROGRESS IN EUROPEAN ASTROPHYSICS: NEW INSTRUMENTS AND TECHNOLOGIES 25-29 SEPT. 1995 CATANIA, ITALY, Bd. 7, Nr. 4, 1997, Seiten 361-367, XP009053325 Experimental Astronomy Kluwer Academic Publishers Netherlands ISSN: 0922-6435
- LTB LASERTECHNIK BERLIN GMBH: "Butterfly with eagle eye" PRESSEMITTEILUNG, 25. Januar 2005 (2005-01-25), XP002343444 berlin

## Beschreibung

### Technisches Gebiet

Die Erfindung betrifft eine Spektrometer-Anordnung mit einem Spektrometer zur Erzeugung eines Spektrums eines ersten Wellenlängenbereichs von Strahlung aus einer Strahlungsquelle auf einem Detektor, enthaltend
(a) ein Echelle-Gitter zur spektralen Zerlegung der in die Spektrometer-Anordnung eintretenden Strahlung in einer Hauptdispersionsrichtung
(b) ein dispergierendes Element zur Ordnungstrennung mittels spektraler Zerlegung der Strahlung in einer Querdispersionsrichtung, welche einen Winkel mit der Hauptdispersionsrichtung des Echelle-Gitters bildet, so daß ein zweidimensionales Spektrum mit einer Mehrzahl von getrennten Ordnungen erzeugbar ist,
(c) eine abbildende Optik zur Abbildung der durch einen Eintrittsspalt in die Spektrometer-Anordnung eintretenden Strahlung in eine Bildebene und
(d) einen Flächendetektor mit einer zweidimensionalen Anordnung einer Vielzahl von Detektorelementen in der Bildebene.

Bei einem solchen Echelle-Spektrometer werden Gitter mit einem treppenartigen (Echelle (frz.) = Treppe) Querschnitt verwendet. Durch die stufenartige Struktur mit einem entsprechenden Blaze-Winkel wird ein Beugungsmuster erzeugt, welches die gebeugte Intensität in hoher Ordnung, z.B. in fünfzigster bis einhundertster Ordnung konzentriert. Dadurch können hohe spektrale Auflösungen bei kompakter Anordnung erreicht werden. Die Ordnungen können sich - je nach einfallenden Wellenlängen - überlagern. Die Ordnungen werden daher nochmals quer zur Dispersionsebene dispergiert, um die verschiedenen auftretenden Ordnungen zu trennen. Man erhält so ein zweidimensionales Spektrum, das mit Flächendetektoren erfasst werden kann.

Ein solches Echelle-Spektrometer mit interner Ordnungtrennung unterscheidet sich von Echelle-Spektrometern mit externer Ordnungstrennung, bei welchen nur Strahlung aus einem kleinen Spektralbereich in das Spektrometer eintritt. Bei Spektrometern mit interner Ordnungstrennung wird das Spektrum in Form einer zweidimensionalen Struktur auf dem Detektor erzeugt. Diese Struktur besteht aus im wesentlichen parallel zueinander angeordneten, spektralen Abschnitten von der Größe eines freien Spektralbereichs. Die Verwendung eines Flächendetektors mit einer Vielzahl von Detektorelementen erlaubt die simultane Erfassung eines großen Wellenlängenbereichs mit hoher Auflösung.

Die Querdispersion wird gewöhnlich so groß gewählt, dass die Ordnungen überall vollständig getrennt sind. Um dies über den gesamten Spektralbereich zu gewährleisten, gibt es spektrale Bereiche, bei denen zwischen den einzelnen Ordnungen ein nicht genutzter Zwischenraum entsteht. So entstehen bei Verwendung eines Prismas zur Querdispersion im kurzwelligen Spektralbereich aufgrund des höheren Brechungsindex größere Zwischenräume als im längerwelligen Spektralbereich.

Nachteilig bei den bekannten Anordnungen ist es, daß die Detektoren im allgemeinen sehr groß sein müssen, wenn größere Spektralbereiche mit hoher Auflösung und ausreichendem Lichtleitwert erfasst werden sollen. Weiterhin ergeben sich Probleme, wenn die Strahlungsquelle mit sehr unterschiedlichen spektralen Intensitäten emittiert. So wird der in der Spektroskopie wichtige Spektralbereich von 193 nm bis 852 nm zwar von einigen Strahlern vollständig abgedeckt, die Intensität ist jedoch im Bereich oberhalb 350 nm oftmals um mehrere Größenordnungen höher als im kurzwelligen Spektralbereich bei 200 nm. Üblicherweise haben Detektoren keinen ausreichenden Dynamikbereich, so daß die Spektralbereiche nur mit Einbußen bei der Empfindlichkeit simultan erfasst werden können oder getrennt voneinander mit unterschiedlichen Belichtungszeiten gemessen werden müssen.

### Stand der Technik

Es ist eine Anordnung bekannt, bei welcher die Zwischenräume zwischen den Ordnungen genutzt werden. Das Spektrometer wird mit einer Anordnung zur Vordispersion der in das Spektrometer eintretenden Strahlung versehen. Die Strahlung wird an einem Prisma mit sehr kleinem Winkel vordispergiert. Weiterhin wird eine Eintrittsspalthöhe gewählt, die mit der maximalen Breite eines Zwischenraums zwischen zwei Ordnungen im kurzwelligen Spektralbereich korrespondiert. Durch geeignete Beleuchtung des Eintrittsspalts kann nun die kurzwellige Strahlung vollständig in das Spektrometer eintreten. Die Strahlung der längerwelligen Spektralbereiche trifft durch die Vordispersion nur teilweise auf den Eintrittsspalt. Dadurch wird in den Bereichen, wo die Ordnungstrennung nicht so groß ist, eine geringere Eintritlsspalthöhe wirksam. Auf diese Weise wird für den im allgemeinen intensitätsschwachen kurzwelligen Spektralbereich der Lichtleitwert erhöht.

Durch diese Anordnung wird die Detektorfläche zwar vollständig ausgenutzt, die Detektorgröße bleibt jedoch gleich. Auch die Beleuchtungsstärke jedes einzelnen Detektorelements wird durch die Anordnung praktisch nicht verändert. Dafür treten insgesamt Verluste an den zusätzlichen optischen Komponenten auf.

Es ist weiterhin eine Anordnung bekannt, die eine bessere Ausnutzung der Detektoroberfläche durch gleichmäßigere Querdispersion über den gesamten Spektralbereich zum Ziel hat. Diese gleichmäßigere Querdispersion wird dadurch erreicht, daß die Querdispersion durch zwei gegenläufige Prismen unterschiedlichen Materials bewirkt wird. Die Dispersion bestimmt sich dann aus der Differenz der Dispersionen der beiden Materialien. Es müssen große Prismenwinkel verwendet werden, um eine ausreichend große Differenz zu erreichen. Es treten entsprechend hohe Transmissionsverluste bei gleichzeitig nur geringer resultierender Dispersion auf.

Es ist außerdem eine Anordnung bekannt, bei welcher eine Kombination aus Prisma und Gitter zur Erzeugung der Querdispersion verwendet werden. Das Prisma hat im kurzwelligen Spektralbereich eine höhere Dispersion und das Gitter im langewelligen Spektralbereich. Die Kombination erzeugt eine gleichmäßigere Querdispersion, als eine der Komponenten alleine. Nachteilig bei dieser Anordnung ist es jedoch, daß durch die verschiedenen Ordnungen des Querdispersionsgitters die Eindeutigkeit der Ordnungstrennung verloren geht. Auch hier ergeben sich Schwierigkeiten mit dem Dynamikbereich des Detektors, wenn über weite Bereiche simultan gemessen werden soll.

Aus der XP009053325 ist ferner eine Anordnung zur Registrierung von Spektren mit hoher spektraler Auflösung im Wellenlängenbereich von 110 nm bis 350 nm bekannt. Die Anordnung ist dadurch charakterisiert, dass sie aus zwei einzelnen Spektrographen auf Basis von Echelle-Gittem besteht. Beide Spektrographen haben jeweils eigene Eintrittsspalte und decken unterschiedliche Wellenlängenbereiche (110 nm - 180 nm bzw. 178 nm - 350 nm) ab. Dabei werden die Teilspektren jeweils mit mindestens einem unabhängig arbeitenden Detektor registriert.

### Offenbarung der Erfindung

Es ist Aufgabe der Erfindung, eine Spektrometer-Anordnung der eingangs genannten Art zu schaffen, bei welcher die zur Verfügung stehende Detektorfläche besser ausgenutzt werden kann und gleichzeitig die erforderliche Detektorfläche reduziert werden kann. Es ist weiterhin Aufgabe der Erfindung, ein Spektrometer mit verbessertem dynamischen Bereich zu schaffen. Erfindungsgemäß wird die Aufgabe gelöst durch die Merkmale des Kennzeichens des Anspruchs 1.

Durch die Verwendung zusätzlicher optischer Komponenten in einem separaten Strahlengang kann das Spektrum in zwei Spektralbereiche aufgeteilt werden. Dabei können die optischen Komponenten, d.h. dispergierende Elemente, Spiegel, Eintrittsspaltbreite etc. individuell an die Meßaufgabe angepasst werden. Auf diese Weise kann zum Beispiel der Lichtleitwert für die intensitätsstarken Wellenlängenbereiche klein und für die intensitätsschwachen Bereiche groß gemacht werden. Dadurch wird die auf den Detektor auftreffende Strahlung besser an dessen Dynamikbereich angepasst. Intensive Linien können simultan neben schwachen Linien gemessen werden. Weitherhin können die beiden von den unterschiedlichen Spektrometer-Anordnungen in der gemeinsamen Bildebene erzeugten Spektren von dem gleichen Detektorbereich erfasst werden, so daß die äußeren Abmessungen des Detektors insgesamt kleiner werden. Dann brauchen auch nicht mehr so viele Detektorelemente ausgelesen zu werden, so daß die Auslesezeiten verringert werden. Es werden innerhalb des Spektrometers keine beweglichen Teile, wie Klappspiegel oder Chopper verwendet. Das erleichtert die Herstellung und Justierung. Weiterhin werden außer ggf. zur primären Strahlteilung keine optischen Bauelemente, wie teildurchlässige Spiegel, Strahlteiler oder dergleichen benötigt, welche den Lichtleitwert reduzieren.

Besonderer Vorteil dieser Spektrometer-Anordnung ist es, daß beide Spektren scharf auf den Detektor abgebildet werden. Chromatische oder sonstige Abbildungsfehler werden somit minimiert. Dies ist besonders bei zweidimensionalen, kontinuierlichen Spektren wichtig, da diese eine Ebene definieren, in welcher der Detektor liegt.

Vorzugsweise ist das weitere dispergierende Element ebenfalls ein Echelle-Gitter. Dabei kann ein dem zweiten Echelle-Gitter zugeordnetes dispergierendes Element vorgesehen sein, mit welchem die von dem zweiten Echelle-Gitter dispergierte Strahlung zur Ordnungstrennung in einer Querdispersionsrichtung spektral zerlegbar ist, die einen Winkel mit der Dispersionsrichtung des zweiten Echelle-Gitters bildet. Dann umfasst die gesamte Anordnung zwei unabhängige Echelle-Spektrometer, die beide den gleichen Detektor verwenden. In jedem Echelle-Spektrometer wird ein zweidimensionales Echelle-Spektrum eines unterschiedlichen spektralen Bereichs erzeugt. Jedes der Spektrometer kann auf diesen spektralen Bereich angepasst werden. So können die Lichtleitwerte an den Dynamikbereich des Detektors angepasst werden. Die Reflektivität und Transmission der optischen Komponenten können für den jeweiligen spektralen Bereich optimiert werden. In einer Ausgestaltung der Erfindung ist jeweils ein Prisma als dispergierendes Element zur Ordnungstrennung vorgesehen.

In einer besonders bevorzugten Ausgestaltung der Erfindung ist die weitere Spektrometer-Anordnung symmetrisch zu der ersten Spektrometer-Anordnung angeordnet, wobei der Detektor auf der Symmetrieebene und senkrecht zu dieser liegt. Bei einer solchen Anordnung steht der Detektor nicht senkrecht auf der Verbindungslinie zwischen Detektor und Kameraspiegel. Dies kann zum Beispiel durch eine unter dem Begriff "Tetraeder-Anordnung" bekannte Anordnung verwirklicht werden, bei welcher die Dispersionsrichtung des Echellegitters senkrecht zum Ablenkwinkel an der abbildenden Optik verläuft. Die abbildende Optik ist dabei jeweils von einem Kollimator- und einem Kameraspiegel gebildet. Bei dieser Anordnung sind die Mittelpunkte von Kollimator- und Kameraspiegel innerhalb der Dispersionsebene des Echelle-Gitters angeordnet.

In einer Ausgestaltung der Erfindung ist ein Spiegel zur Faltung des Strahlengangs zwischen dem Eintrittsspalt und dem Kollimatorspiegel vorgesehen. Weiterhin können Mittel zur Beeinflussung der Spiegelkrümmung vorgesehen sein derart, daß Abbildungsfehler, insbesondere Astigmatismus kompensierbar sind. Die Mittel zur Beeinflussung der Spiegelkrümmung können von einem Spiegelrahmen und wenigstens einem longitudinalen Druckmittel gebildet sein, welches sich über eine Spiegelhöhe erstreckt und im wesentlichen mittig einen Druck derart von hinten gegen den Spiegel ausübt, daß sich eine Druck-abhängige Spiegelwölbung ausbildet. Das Druckmittel kann von der Kraft einer einstellbaren Stellschraube beaufschlagt sein. Bei einer solchen Ausgestaltung können die Abbildungsfehler auf besonders einfache Weise korrigiert werden.

In einer ersten Ausgestaltung der Erfindung ist die Querdispersion derart ausgelegt, daß zwischen den Ordnungen des zweidimensionalen Spektrums der ersten Spektrometer-Anordnung auf dem Detektor unbeleuchtete Zwischenräume vorliegen, in welche das Spektrum der zweiten Spektrometer-Anordnung abbildbar ist. Dann werden die auf dem Detektor erzeugten Spektren räumlich überlagert und gleichzeitig ausgelesen.

In einer alternativen Ausgestaltung sind Mittel zum zeitlich gesteuerten Beleuchten des Detektors vorgesehen, so daß alternativ der erste oder der zweite Wellenlängenbereich auf den Detektor gelangt. Bei dieser Alternative werden die erzeugten Spektren zeitlich getrennt ausgelesen. Die Belichtungszeiten können entsprechend dem Dynamikbereich des Detektors für jedes Spektrum einzeln angepasst werden. Die beiden Alternativen sind miteinander kombinierbar. Die Einstellung der Belichtungszeiten kann durch Öffnen und Schließen der jeweiligen Eintrittsspalte erfolgen. Zu diesem Zweck kann auch ein gemeinsamer Chopper außerhalb der Spektrometer-Anordnung vorgesehen sein.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig.1: ist eine schematische Darstellung einer Spektrometer-Anordnung mit zwei spiegelbildlich angeordneten Echelle-Spektrometern.
- Fig.2: veranschaulicht, wie zwei Spektren räumlich auf einem Detektor überlagert werden können.
- Fig.3: veranschaulicht, wie zwei räumlich überlagerte Linienspektren auf eine minimale Überlappung eingestellt werden können.
- Fig.4: zeigt einen zeitlichen Intensitätsverlauf an einem Detektorelement, bei dem der Detektor mit zwei Spektren alternierend in unterschiedlichen Intervallen beleuchtet und ausgelesen wird
- Fig.5: zeigt den zeitlichen Intensitätsverlauf an einem Detektorelement, bei dem der Detektor mit zwei Spektren mit alternierend in gleichen Intervallen beleuchtet und in unterschiedlichen Intervallen ausgelesen wird.
- Fig.6: ist eine Draufsicht auf eine Chopperscheibe zur Beleuchtung der Eintrittsspalte in Intervallen.

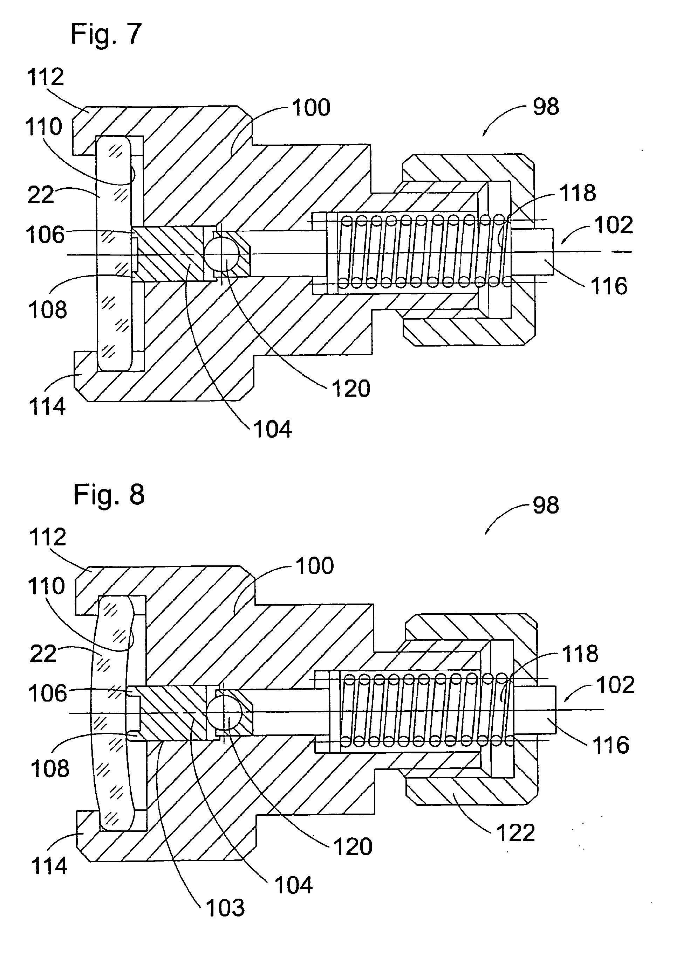

- Fig.7: ist eine Detaildarstellung eines einstellbaren Zylinderspiegels in ungekrümmter Lage
- Fig.8: zeigt den Zylinderspiegel aus Fig.7 in gekrümmter Lager

### Beschreibung des Ausführungsbeispiels

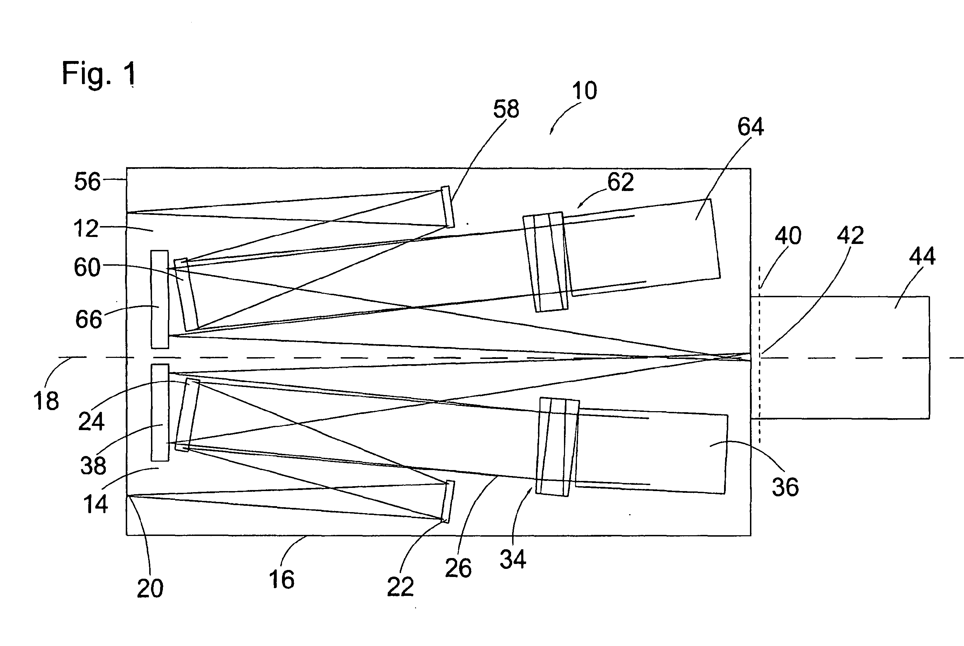

In Fig.1 ist mit 10 allgemein eine Spektrometer-Anordnung bezeichnet. Die Spektrometer-Anordnung 10 umfasst zwei Spektrometer 12 und 14, welche in einem gemeinsamen Gehäuse 16 untergebracht sind. Die Komponenten der Spektrometer 12 und 14 sind bezüglich einer Ebene 18 spiegelbildlich zueinander angeordnet. Der Einfachheit halber wird hier daher nur ein Spektrometer näher beschrieben.

An einem Eintrittsspalt 20 tritt die Strahlung in das Spektrometer. Die einfallende Strahlung trifft auf einen Planspiegel 22. An dem Planspiegel 22 wird die Strahlung in Richtung auf einen Kollimatorspiegel 24 reflektiert. Der Kollimatorspiegel 24 ist ein sphärischer Spiegel, mit welchem die divergente Strahlung parallelisiert wird. Das parallele Bündel 26 läuft durch ein Prisma 34. Hinter dem Prisma ist ein Echelle-Gitter 36 angeordnet.

Die Dispersionsrichtung des Echelle-Gitters 36 verläuft in einer Ebene senkrecht zur Darstellungsebene in Fig.1. Die Gitterfurchen des Echelle-Gitters liegen in der Darstellungsebene im wesentlichen von oben nach unten in Fig.1. Das Echelle-Gitter hat einen großen Blazewinkel und die Strahlung trifft unter einem sehr flachen Winkel auf das Gitter, welches in einem Winkel mit der Darstellungsebene angeordnet ist. Von dem Gitter 36 wird die parallele, dispergierte Strahlung auf den Kameraspiegel 38 reflektiert. Dabei tritt die Strahlung erneut durch das Prisma 34. Vom Kameraspiegel 38 wird die Strahlung in die Bildebene 40 fokussiert. In der Ebene 40 ist ein Flächendetektor 42 angeordnet. Der Flächendetektor 42 besteht aus einem Array mit einer Vielzahl von Detektorelementen. Ein solcher Flächendetektor ist zum Beispiel ein CCD-Detektor. Die übrigen Bauteile, welche üblicherweise zu einem Detektor gehören, wie Verstärker, Wandler, Elektronik und Datenverarbeitungsmittel sind schematisch mit 44 dargestellt.

Das Echelle-Gitter 36 dispergiert die Strahlung senkrecht zur Darstellungsebene. Durch den großen Blaze-Winkel und den im Vergleich zur Wellenlänge großen Abstand der Gitterfurchen wird dabei die Strahlung in einer Vielzahl von Ordnungen hoher Ordnungszahl konzentriert. Dadurch wird eine besonders hohe Auflösung bei vergleichsweise kompakter Anordnung erreicht. Das Prisma 34 dispergiert die Strahlung in der Darstellungsebene senkrecht zur Dispersionsrichtung des Echelle-Gitters 36 (Hauptdispersionsrichtung). Dadurch werden die Ordnungen auseinandergezogen. Es entsteht ein zweidimensionales Spektrum auf dem Detektor.

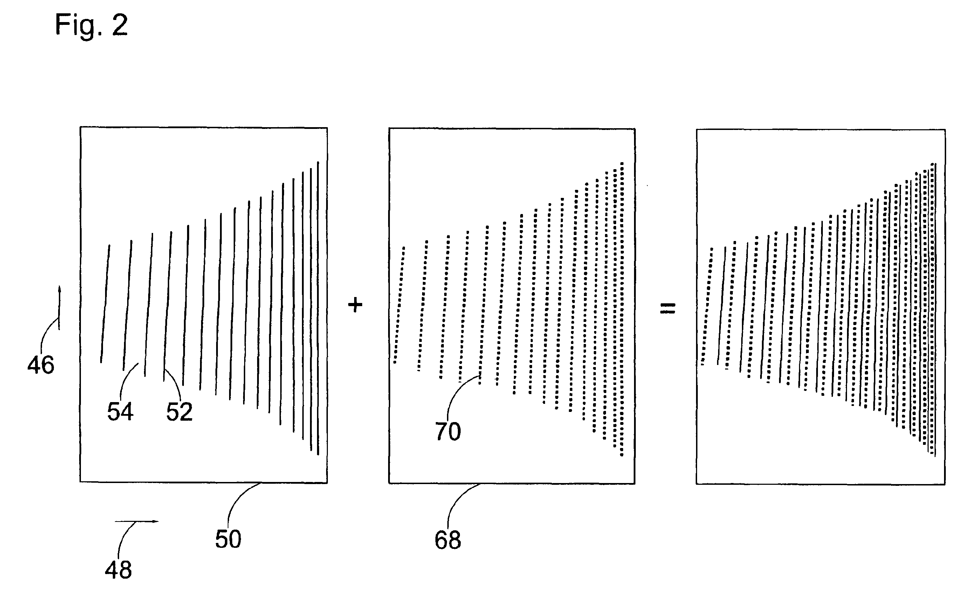

In Fig. 2 ist ein solches Spektrum eines Strahlers mit kontinuierlichem Spektrum schematisch dargestellt. Mit 50 ist der Rand des Spektrums auf dem Detektor 42 bezeichnet, der hier in Draufsicht gezeigt ist. Die Hauptdispersionsrichtung verläuft in Richtung des Pfeils 46. Die Querdispersionsrichtung der Prismenanordnung verläuft in Richtung des Pfeils 48. Entsprechend sind die kurzen Wellenlängen des Ultraviolletten Spektralbereichs links in Fig.2 und die längeren Wellenlängen des nahen Infrarotbereichs ganz rechts. Jeweils eine senkrechte Linie 52 repräsentiert einen freien Spektralbereich einer Ordnung. Entsprechend der Gitterdispersion ist die Dispersion bei kleinen Wellenlängen größer und der freie Spektralbereich kleiner. Die Ordnungen sind durch die Querdispersion in Richtung des Pfeils 48 auseinandergezogen. Zwischen den Ordnungen bilden sich Zwischenräume 54. Entsprechend der Prismendispersion sind diese Zwischenräume 54 im kurzwelligen Bereich größer als im langwelligen Bereich.

In Fig. 1 ist auch das zweite Spektrometer 12 mit einem zweiten Spalt 56 dargestellt. Es ist ebenso wie das erste Spektrometer 14 aufgebaut. Die Strahlung läuft über Planspiegel 58, Kollimatorspiegel 60, durch das Prisma 62, über das Gitter 64 zum Kameraspiegel 66 und wird dann ebenfalls auf den Detektor 42 fokussiert. Auch hier ist das Gitter ein Echelle-Gitter. Es besteht aber auch die Möglichkeit, ein gewöhnliches Beugungsgitter statt eines Echelle-Gitters zu verwenden und nur eine Ordnung, z.B. auch als Referenz mit großem Abtastbereich, auf den Detektor abzubilden.

Auch das Spektrometer 12 erzeugt ein zweidimensionales Bild auf dem Detektor 42. Dies ist in Fig.2 durch gestrichelte Linien 70 gesondert dargestellt und mit 68 bezeichnet. Werden beide Eintrittspalte 56 und 20 beleuchtet, so besteht die Möglichkeit, beide Spektren miteinander zu verschränken und simultan auf den Detektor 42 abzubilden. An den Kameraspiegeln 38 und/oder 66 und an den Echelle-Gittern 36 und/oder 64 sind Schrittmotoren vorgesehen (nicht dargestellt) mit welchen das Bild in der Detektorebene bewegt werden kann. Dann können die Spektren so miteinander verschränkt werden, daß die Ordnungen 70 des einen Spektrums in den Zwischenräumen 54 des anderen Spektrums liegen. Die Detektorfläche wird dadurch optimal ausgenutzt. Wenn die Strahlung des kurzwelligen Bereichs, z.B. von 190 nm bis 300 nm durch das eine Spektrometer und die Strahlung des längerwelligen Bereichs, z.b. 300 nm bis 852 nm durch das andere Spektrometer geleitet wird, können auf diese Weise die Abmessungen des Detektors gering gehalten werden, ohne daß Lichtleitwert oder spektrale Auflösung sich wesentlich ändern. Aufgrund der Wellenlängenabhängigkeit der Prismendispersion muß in diesem Fall mit Kombinationen unterschiedlicher Prismen 62, 34 gearbeitet werden, deren Wellenlängenabhängigkeit zu Dispersionen führt, die ein geeignetes Ordnungsmuster liefern.

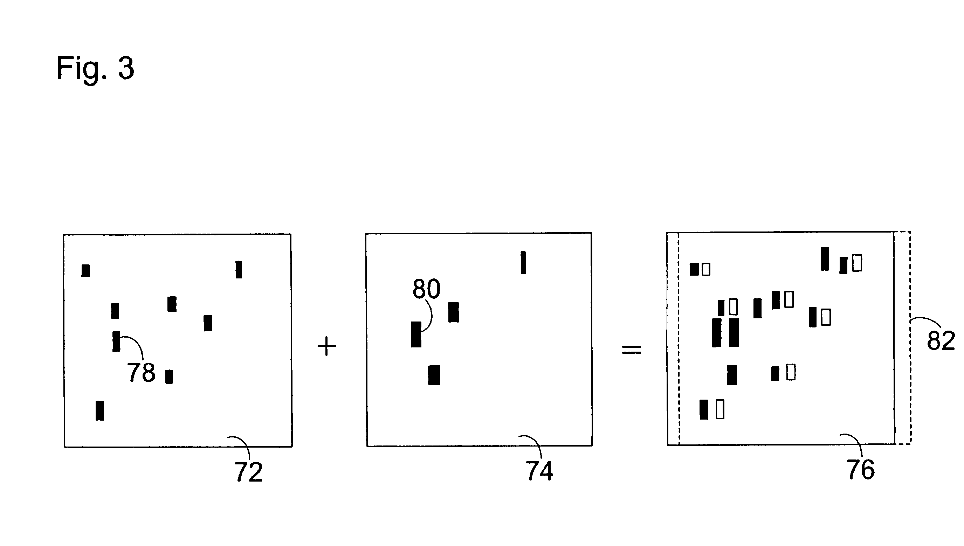

Insbesondere bei Linienstrahlern als Strahlungsquelle oder bei Meßaufgaben, bei denen nur bestimmte, kleine, klar definierte Spektralbereiche relevant sind, braucht die Prismendispersion nicht notwendigerweise an die Ordnungstrennung des jeweils anderen Spektrumsausschnitts angepasst werden. Dies ist schematisch in Fig.3 dargestellt. Hier werden zwei Linienspektren 72 und 74 auf dem Detektor überlagert, so daß sich das Bild 76 ergibt. In diesem Bild würden sich die Linien 78 und 80 überlappen. Das Spektrum 72 wird daher durch Schwenken des Kameraspiegels etwas in der Ebene verschoben, so daß sich die Linien nicht mehr überlappen. Die ursprüngliche Lage des Spektrums 72 ist durch gestrichelte Linien 82 dargestellt. Bei komplexeren Linienspektren ist eine Überlappung nie ganz auszuschließen. Dann werden die Bilder der Spektren z.B. durch mäanderförmige, schrittweise Bewegung gegeneinander verschoben und der Überlappungsgrad ermittelt. Die optimale Lage der Bilder zueinander wird dann durch den minimalen Überlappungsgrad definiert.

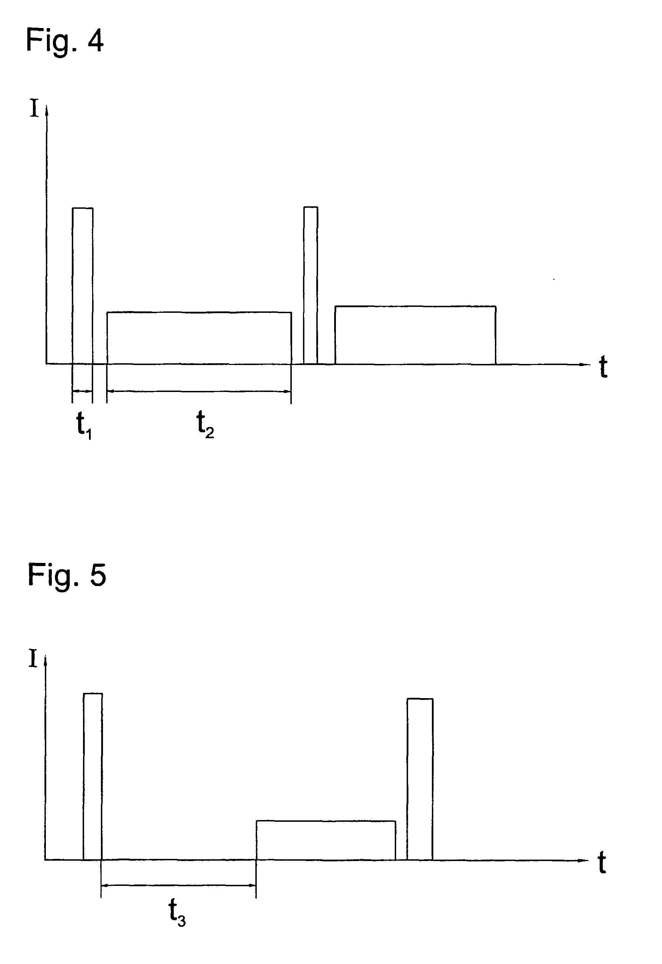

In einer Alternative zur flächenmäßigen Überlagerung der Spektren werden die Spektren zeitlich versetzt auf den Detektor abgebildet. In Fig.4 ist der Intensitätsverlauf an einem Pixel schematisch dargestellt. Je nach Detektor wird das intensitätsschwächere Spektrum erst nach einem längeren Intervall t₂ ausgelesen als das intensivere Spektrum, das bereits nach einem kurzen Intervall t₁ ausgelesen wird.

Alternativ wird das intensive Spektrum mittels eines Choppers abgeblendet, so daß der Detekor kürzer als mit dem intensitätsschwachen Spektrum belichtet wird. Dies ist in Fig. 5 dargestellt. Hier tritt während des Intervalls t₃ kein Licht durch den Spalt.

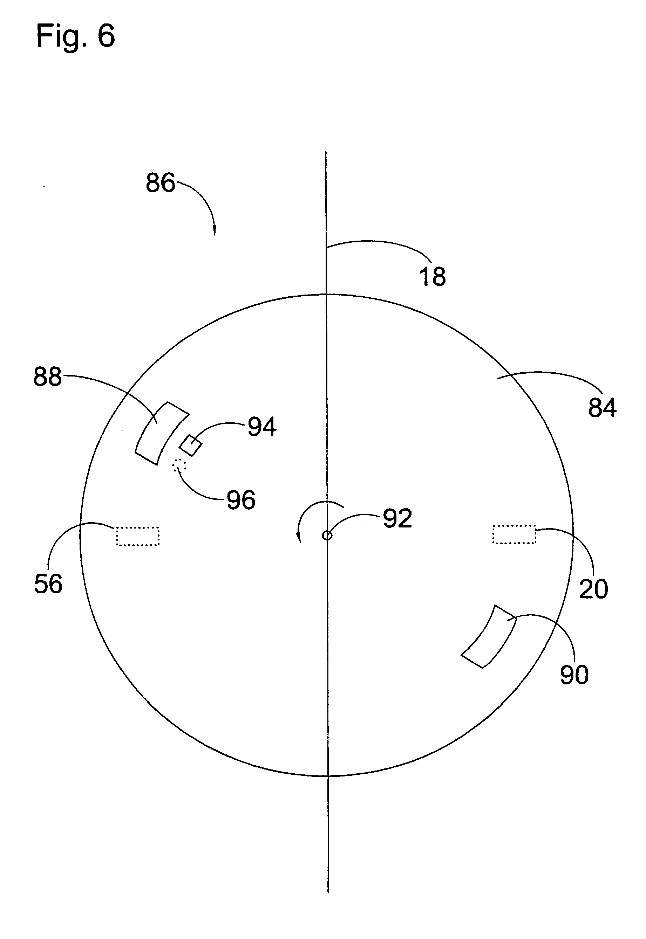

Es gibt Anwendungen, zum Beispiel LIPS, bei denen besonders schnelle Schaltzeiten erforderlich sind. Bei dieser Anwendung wird eine Probe mit einem Laserstrahl abgetastet. Der Laserstrahl löst einen geringen Teil der Oberflächenmaterie und regt diese an. In den ersten Mikrosekunden nach Auftreffen des Laserpulses emittiert die Materie ein kontinuierliches Spektrum. Diese Strahlung soll nicht detektiert werden. Erst nach Ablauf dieses Zeitraums soll die elementspezifische Atomemission aufgenommen werden. Im vorliegenden Aufbau wird zur Realisierung dieser besonders kurzen Schaltzeiten ein rotierender Chopper 86 verwendet, der in Fig. 6 dargestellt ist. Der Chopper 86 ist unmittelbar vor einem und/oder beiden Eintrittsspalten 20 und 56 in Fig.1 angeordnet. Der Chopper umfasst eine Scheibe 84 mit einem Durchmesser von etwa 10 cm. Der Durchmesser ist größer als der Abstand zwischen den Eintrittspalten 20 und 56. In der Scheibe 84 sind zwei Spalte 88 und 90 mit einer Breite von weniger als 10 mm vorgesehen. Die Scheibe 84 ist auf der Welle eines Hochgeschwindigkeitsmotors angeordnet. Die Welle liegt auf der mit 92 bezeichneten Chopperachse und ist in der Spiegelebene 18 in Fig.1 angeordnet. Der Motor arbeitet mit Drehzahlen im Bereich von 30 000 /min. Zur Vermeidung von Luftreibung und Schwingungen ist die Scheibe in einem Gehäuse angeordnet, welches Fenster für die Strahlung aufweist. Zur Wärmeableitung ist eine Wasserkühlung an dem Gehäuse vorgesehen. Mit dieser Anordnung können Schaltzeiten im Bereich 1 µs, bei Detektionszeiten von etwa 20µs realisiert werden.

## Patentansprüche

1. Spektrometer-Anordnung (10) mit einem Spektrometer (14) zur Erzeugung eines Spektrums eines ersten Wellenlängenbereichs von Strahlung aus einer Strahlungsquelle auf einem Detektor (42), enthaltend
(a) ein Echelle-Gitter (36) zur spektralen Zerlegung der in die Spektrometer-Anordnung (10) eintretenden Strahlung in einer Hauptdispersionsrichtung (46),
(b) ein dispergierendes Element (34) zur Ordnungstrennung mittels spektraler Zerlegung der Strahlung in einer Querdispersionsrichtung (48), welche einen Winkel mit der Hauptdispersionsrichtung des Echelle-Gitters (36) bildet, so daß ein zweidimensionales Spektrum (50) mit einer Mehrzahl von getrennten Ordnungen (52) erzeugbar ist,
(c) eine abbildende Optik (24, 38) zur Abbildung der durch einen Eintrittsspalt (20) in die Spektrometer-Anordnung (10) eintretenden Strahlung in eine Bildebene (40)
(d) einen Flächendetektor (42) mit einer zweidimensionalen Anordnung einer Vielzahl von Detektorelementen in der Bildebene (40), und
(e) ein weiteres Spektrometer (12) mit wenigstens einem weiteren dispergierenden Element (64) und einer weiteren abbildenden Optik (60,66) zur Erzeugung eines Spektrums (68) eines von dem ersten Wellenlängenbereich unterschiedlichen zweiten Wellenlängenbereichs von Strahlung aus einer Strahlungsquelle
**dadurch gekennzeichnet, daß**
(f) das weitere Spektrum auf denselben Detektor (42) abgebildet wird, wobei sich die Spektren der beiden Wellenlängenbereiche auf dem Detektor zumindest teilweise flächenmäßig überlagern, und die Querdispersion
(g1) derart ausgelegt ist, daß zwischen den Ordnungen (52) des zweidimensionalen Spektrums des ersten Spektrometers (14) auf dem Detektor unbeleuchtete Zwischenräume (54) vorliegen, in welche das Spektrum des zweiten Spektrometers (12) zumindest teilweise abbildbar ist,
oder
(g2) Mittel zum zeitlich gesteuerten Beleuchten des Detektors vorhanden sind, so daß alternativ der erste oder der zweite Wellenlängenbereich auf den Detektor (42) gelangt.

2. Anordnung nach Anspruch 1, **dadurch gekennzeichnet, daß** das weitere dispergierende Element (64) ebenfalls ein Echelle-Gitter ist, und ein dem zweiten Echelle-Gitter zugeordnetes dispergierendes Element (62) vorgesehen ist, mit welchem die von dem zweiten Echelle-Gitter dispergierte Strahlung zur Ordnungstrennung in einer Querdispersionsrichtung (48) spektral zerlegbar ist, die einen Winkel mit der Dispersionsrichtung des zweiten Echelle-Gitters bildet.

3. Anordnung nach einem der vorgehenden Ansprüche, **dadurch gekennzeichnet, daß** jeweils ein Prisma (34, 62) als dispergierendes Element zur Ordnungstrennung vorgesehen ist.

4. Anordnung nach einem der vorgehenden Ansprüche, **dadurch gekennzeichnet, daß** die weitere Spektrometer-Anordnung (12) symmetrisch zu der ersten Spektrometer-Anordnung (14) angeordnet ist, der Detektor (42) auf der Symmetrieebene (18) und senkrecht dazu liegt.

5. Anordnung nach einem der vorgehenden Ansprüche, **dadurch gekennzeichnet, daß** die abbildende Optik jeweils von einem Kollimator- (24, 60) und einem Kameraspiegel (38, 66) gebildet ist.

6. Anordnung nach einem der vorgehenden Ansprüche, **dadurch gekennzeichnet, daß** ein Spiegel (22, 58) zur Faltung des Strahlengangs zwischen dem Eintrittsspalt (20, 56) und dem Kollimatorspiegel (24, 60) vorgesehen ist und Mittel zur Beeinflussung der Spiegelkrümmung vorgesehen sind derart, daß Abbildungsfehler, insbesondere Astigmatismus kompensierbar sind.

7. Anordnung nach Anspruch 6, **dadurch gekennzeichnet, daß** die Mittel zur Beeinflussung der Spiegelkrümmung von einer Halterung und wenigstens einem longitudinalen Druckmittel gebildet sind, welches sich über eine Spiegelhöhe erstreckt und im wesentlichen mittig einen Druck derart von hinten gegen den Spiegel ausübt, daß sich eine Druck-abhängige Spiegelwölbung ausbildet.

8. Anordnung nach Anspruch 7, **dadurch gekennzeichnet, daß** das Druckmittel (104) von der Kraft einer einstellbaren Stellschraube beaufschlagt ist.

9. Verfahren zum Justieren einer Spektrometer-Anordnung nach einem der vorgehenden Ansprüche, **gekennzeichnet durch** die Schritte:
(a) Beleuchten des Eintrittsspalts (56) des ersten Spektrometers (14) mit der Strahlung eines ersten Linien-Strahlers,
(b) Beleuchten des Eintrittsspalts (20) des zweiten Spektrometers (12) mit der Strahlung eines zweiten Linien-Strahlers,
(c) simultanes Detektieren der in dem ersten und zweiten Spektrometer erzeugten Linienspektren mit dem gemeinsamen Detektor (42) und
(d) flächenmäßiges Verschieben der beiden Linienspektren gegeneinander mittels eines oder beider abbildenden Optiken derart, daß die Überlappung aller oder ausgewählter Linien minimal ist.

10. Verwendung einer Spektrometer-Anordnung nach einem der Ansprüche 1 bis 8 für Laser-Induzierte Plasma-Spektroskopie (LIPS).

## Claims

1. Spectrometer assembly (10) with a spectrometer (14) for generating a radiation spectrum in a first wavelength range of a light source on a detector (42) comprising
(a) an Echelle grating (36) for spectrally dispersing radiation entering the spectrometer assembly (10) in a main dispersion direction (46),
(b) a dispersion element (34) for separating the orders by means of spectrally dispersing the radiation in a lateral dispersion direction (48) forming an angle with the main dispersion direction of the Echelle grating (36) adapted to generate a two dimensional spectrum (50) with a plurality of separated orders (52),
(c) an imaging optical system (24, 38) for imaging the radiation entering through an entrance slit (20) into the spectrometer assembly (10) in an imaging plane (40), and
(d) a detector array (42) with a two-dimensional arrangement of a plurality of detector elements in the imaging plane (40), and
(e) a further spectrometer (12) having a further dispersion element (64) and a further imaging optical system (60, 66) for the generation of a spectrum (68) of a second wavelength range which is different to the first wavelength range of the radiation from a light source on the same detector (42),
**characterized in that**
(f) the further spectrum is focused on the same detector (42), the spectra of the two wavelength ranges spatially at least partially superimposing on the detector, and
(g1) the lateral dispersion is designed such that dark spaces (54) are present between the orders (52) of the two dimensional spectrum of the first spectrometer (14) on the detector adapted to at least partially receive the spectrum of the second spectrometer (12) imaged thereon, or
(g2) means are provided for controlling the times for illuminating the detector in such a way that alternatingly the first or the second wavelength range is imaged onto the detector (42).

2. Assembly according to claim 1, **characterized in that** the further dispersion element (64) is also an Echelle grating and a dispersion element (62) is attributed to the second Echelle grating which is used for the spectral dispersion of the radiation dispersed by the second Echelle grating in a lateral dispersion direction (48) for separating the orders, the direction forming an angle with the dispersion direction of the second Echelle grating.

3. Assembly according to any of the preceeding claims, **characterized in that** a prism (34, 62) is provided as a dispersion element for separating the respective orders.

4. Assembly according to any of the preceeding claims, **characterized in that** the further spectrometer assembly (12) is symmetrically positioned to the first spectrometer assembly (14) and the detector (42) is positioned on the plane of symmetry (18) and perpendicular thereto.

5. Assembly according to any of the preceeding claims, **characterized in that** the imaging optical system is each formed by a collimator- (24, 60) and a camera mirror (38, 66).

6. Assembly according to any of the preceeding claims, **characterized in that** a mirror (22, 58) is provided for folding the light path between the entrance slit (20, 56) and the collimator (24, 60) and means for influencing the curvature of the mirror adapted to compensate imaging errors, such as astigmatism.

7. Assembly according to claim 6, **characterized in that** the means for influencing the curvature of the mirror are formed by a carrier and at least one longitudinal pressure means extending along a mirror height and pressurizing the mirror from behind at essentially its middle in such a way that a pressure dependent mirror curvature is formed.

8. Assembly according to claim 7, **characterized in that** the pressure means (104) is exposed to the forces of an adjustable screw.

9. Method for adjusting a spectrometer assembly according to any of the preceeding claims, **characterized by** the steps
(a) illuminating the entrance slit (56) of the first spectrometer (14) with the radiation of a first line emitter,
(b) illuminating the entrance slit (20) of the second spectrometer (12) with the radiation of a second line emitter,
(c) simultaneous detecting of the line spectra generated by the first and second spectrometer with the common detector (42) and
(d) spacially shifting of the line spectra against each other by means of one or both imaging optical systems in such a way that the superposition of all or selected lines is a minimum.

10. Use of a spectrometer assembly according to any of claims 1 to 8 for Laser induced plasma spectroscopy (LIPS).

## Revendications

1. Disposition de spectromètre (10) comprenant un spectromètre (14) destiné à générer un spectre d'une première gamme de longueur d'ondes d'un faisceau émanant d'une source de rayonnement sur un détecteur (42), comprenant
(a) un réseau échelle (36) pour la dispersion spectrale du faisceau pénétrant dans la disposition de spectromètre (10) dans un sens de dispersion principal (46),
(b) un élément de dispersion (34) pour séparer les degrés au moyen de la dispersion spectrale du faisceau dans un sens de dispersion transversal (48) qui forme un angle avec le sens de dispersion principal du réseau échelle (36), pouvant ainsi générer un spectre bidimensionnel (50) à plusieurs degrés séparés (52),
(c) un système optique de reproduction (24, 38) destiné à reproduire sur un plan d'image (40) le faisceau pénétrant dans la disposition de spectromètre (10) par une fente d'entrée (20),
(d) un détecteur plan (42) avec une disposition bidimensionnelle de plusieurs éléments détecteurs dans le plan d'image (40), et
(e) un autre spectromètre (12) comprenant au moins un autre élément de dispersion (64) et un autre système optique de reproduction (60, 66) pour la génération d'un spectre (68) d'une seconde gamme de longueur d'ondes différente de la première d'un faisceau émanant d'une source de rayonnement,
**caractérisée en ce que**
(f) l'autre spectre est reproduit sur le même détecteur (42), les spectres des deux gammes de longueur d'ondes pouvant se superposer dans l'espace sur le détecteur au moins partiellement, et
(g₁) la dispersion transversale est configurée de sorte à créer sur le détecteur entre les degrés (52) du spectre bidimensionnel du premier spectromètre (14) des interstices (54) non éclairés dans lesquels le spectre du second spectromètre (12) peut être reproduit au moins partiellement, ou
(g₂) il est prévu des moyens pour éclairer le détecteur par commande temporelle de sorte que soit la première soit la seconde gamme de longueur d'ondes frappe le détecteur (42).

2. Disposition selon la revendication 1, **caractérisée en ce que** l'autre élément de dispersion (64) est également un réseau échelle, et il est prévu un élément de dispersion (62) associé au second réseau échelle permettant de disperser sous forme de spectre le faisceau dispersé par le second réseau échelle pour séparer les degrés dans un sens de dispersion transversal (48) formant un angle avec le sens de dispersion du second réseau échelle.

3. Disposition selon l'une quelconque des revendications précédentes, **caractérisée en ce qu'**un prisme (34, 62) est à chaque fois prévu sous forme d'élément de dispersion pour séparer les degrés.

4. Disposition selon l'une quelconque des revendications précédentes, **caractérisée en ce que** l'autre disposition de spectromètre (12) est disposée symétriquement par rapport à la première disposition de spectromètre (14), le détecteur (42) se trouvant dans le plan de symétrie (18), perpendiculairement à celui-ci.

5. Disposition selon l'une quelconque des revendications précédentes, **caractérisée en ce que** le système optique de reproduction est formé à chaque fois par un miroir collimateur (24, 60) et un miroir caméra (38, 66).

6. Disposition selon l'une quelconque des revendications précédentes, **caractérisée en ce qu'**il est prévu un miroir (22, 58) destiné à plier la marche des rayons entre la fente d'entrée (20, 56) et le miroir collimateur (24, 60) ainsi que des moyens destinés à influencer la courbure du miroir de sorte à pouvoir compenser les erreurs de reproduction, notamment l'astigmatisme.

7. Disposition selon la revendication 6, **caractérisée en ce que** les moyens destinés à influencer la courbure du miroir sont formés par une fixation et au moins des moyens de pression longitudinaux qui s'étendent sur toute la hauteur du miroir et exercent sensiblement au centre du miroir une pression venant de l'arrière de sorte qu'il se forme une courbure de miroir dépendant de la pression.

8. Disposition selon la revendication 7, **caractérisée en ce que** les moyens de pression (104) sont sollicités par la force d'une vis de serrage réglable.

9. Procédé destiné à régler une disposition de spectromètre selon l'une quelconque des revendications précédentes, **caractérisé par** les étapes de :
(a) éclairage de la fente d'entrée (56) du premier spectromètre (14) à l'aide du faisceau d'une première source à spectre de raie,
(b) éclairage de la fente d'entrée (20) du second spectromètre (12) à l'aide du faisceau d'une seconde source à spectre de raie,
(c) détection simultanée des spectres de raie générés dans le premier et le second spectromètre à l'aide du détecteur commun (42) et
(d) déplacement dans l'espace des deux spectres de raie l'un par rapport à l'autre au moyen de l'un des systèmes optiques de reproduction ou des deux de sorte à minimiser la superposition de toutes les raies ou des raies choisies.

10. Utilisation d'une disposition de spectromètre selon l'une quelconque des revendications 1 à 8 pour la spectroscopie de plasma induit par laser (LIPS).
